# EUROPÄISCHE PATENTSCHRIFT

(11) **EP 1 917 615 B1**
(45) Veröffentlichungstag und Bekanntmachung des Hinweises auf die Patenterteilung: **19.10.2011**
(21) Anmeldenummer: 06776837.4
(22) Anmeldetag: 14.08.2006
(51) Int. Cl.: G06F 21/00, G07F 7/10

(54) **AUSFÜHREN VON ANWENDUNGSPROZESSEN**
EXECUTION OF APPLICATION PROCESSES
PROCEDE POUR METTRE EN OEUVRE DES PROCESSUS D'APPLICATION

(30) Priorität: 16.08.2005 DE 102005038614
(43) Veröffentlichungstag der Anmeldung: 07.05.2008
(73) Patentinhaber: Giesecke & Devrient GmbH, 81677 München (DE)
(72) Erfinder: MARTINI, Ullrich, 81669 München (DE); SPITZ, Stephan, 81245 München (DE)
(86) Internationale Anmeldenummer: PCT/EP2006/008027
(87) Internationale Veröffentlichungsnummer: WO 2007/020039

(56) Entgegenhaltungen:
- EP-A2- 1 085 415
- US-A1- 2001 049 785
- US-A1- 2003 163 739
- US-A1- 2004 148 526

## Beschreibung

Die Erfindung betrifft ein Verfahren zum Ausführen von Anwendungsprozessen auf einem portablen Datenträger sowie einen solchen portablen Datenträger, insbesondere eine Chipkarte, sichere Multimediakarte, Mobilfunkkarte, USB-Speichermedium oder dergleichen.

Portable Datenträger, die mit einem Prozessor zum Ausführen von Prozessen ausgestattet sind, unterliegen im allgemeinen der Gefahr einer Manipulation von außen. Ziel derartiger Angriffe ist es zumeist, sensible oder geheime Daten eines solchen Datenträgers oder seines Mikrocontrollerchips auszuspähen oder zu manipulieren. Zum Beispiel kann versucht werden, kryptographische Schlüssel oder eine auf dem Datenträger gespeicherte Zugangskennung eines Benutzers unerlaubt zu ermitteln.

Eine Möglichkeit, derartige geheime Daten auszuspähen, ist die Störung der Ausführung von Prozessen, die solche geheimen Daten verarbeiten mittels physikalischen Einwirkungen von außen, für die der Datenträger normalerweise nicht ausgelegt ist, z.B. Wärme- oder Strahlungseinwirkung (z.B. ionisierende Strahlung, Mikrowellen, etc.), Schwankungen der Versorgungsspannung, Taktfrequenz-Störungen und dergleichen. Ausgehend von den Ergebnissen eines solcherart gestörten Prozesses kann mit algorithmischen Mitteln auf die von dem Prozess verarbeiteten geheimen Daten rückgeschlossen werden. Derartige physikalische Angriffe auf einen Datenträger sind insbesondere Lichtangriffe oder Bellcore-Angriffe.

Eine weitere Möglichkeit des Ausspähens geheimer Daten ist die Auswertung von physikalischen Messwerten des Datenträgers während der Ausführung eines geheime Daten verarbeitenden Prozesses, wie z.B. elektromagnetische Emissionen oder des Verlaufs des Stromverbrauchs oder der Rechenzeit.

Als einfache Gegenmaßnahme gegen manipulatorische Angriffe auf einen Datenträger ist die zwei- oder mehrfache (eventuell redundante) Ausführung sicherheitsrelevanter Prozesse, um die Manipulation durch einen Ergebnisvergleich zumindest festzustellen. Hierbei wird ein Prozessergebnis nur dann akzeptiert, wenn es übereinstimmend von allen redundanten Prozessen errechnet wurde. So wird beispielsweise eine bestimmte Transaktion (z.B. eine Kontoanweisung oder eine Zugangsgewährung) von dem Datenträger in Form eines Anwendungsprozesses nur dann eingeleitet oder ausgeführt, wenn zuvor das Vorliegen der Voraussetzungen zur Ausführung des Anwendungsprozesses von zumindest zwei Prüfprozessen oder sicherheitsrelevante Prüfungen durchführenden Sicherheitsprozessen übereinstimmend festgestellt wurde.

Bei der mehrfachen Ausführung einer derartigen Prüf- oder Sicherheitsapplikation ergibt sich jedoch bei portablen Datenträger oft das Problem des inakzeptablen Performanceverlusts und/ oder Rechenzeitbedarfs, da solche Datenträger über vergleichsweise geringe Rechenkapazität verfügen und tendenziell in einem Umfeld eingesetzt werden, welches ein zügiges Abwickeln von Transaktionen erforderlich macht, wie z.B. bei Identitätskontrollen an Grenzübergängen oder Flughäfen, Banktransaktionen an einem Bankterminal oder Überprüfen einer Zugangsberechtigung zu einem Gebäude. Dies gilt insbesondere für rechenaufwendige Sicherheitsprozesse, wie z.B. dem Erheben und Vergleichen von biometrischen Daten eines Benutzer des Datenträgers, die zwar besondere Sicherheit bieten, aber bei mehrfacher redundanter Ausführung zu einer erheblichen Rechen- und Wartezeit führen und deshalb bei vielen Anwendungen nicht einsetzbar sind.

Beispielsweise aus US 2001/0049785 A1 und US2003/0163739 A1 sind Multi-Faktor-Authentisierungen bekannt, wobei unterschiedliche Authentisierungsfaktoren gegebenenfalls parallel zueinander geprüft werden.

Der Erfindung liegt daher die Aufgabe zugrunde, eine zeiteffiziente Möglichkeit bereitzustellen, Angriffe auf einen portablen Datenträger zu erkennen.

Diese Aufgabe wird erfindungsgemäß mittels eines Verfahrens und einer Vorrichtung mit den Merkmalen der nebengeordneten Ansprüche gelöst. In davon abhängigen Ansprüchen sind vorteilhafte Ausgestaltungen und Weiterbildungen der Erfindung angegeben.

Bei dem erfindungsgemäßen Verfahren wird auf einem portablen Datenträger mit Prozessor von zumindest einem Sicherheitsprozess mittels einer sicherheitsrelevanten Prüfung eine Voraussetzung zur Ausführung eines Anwendungsprozesses geprüft. Das Prinzip der vorliegenden Erfindung besteht nun darin, dass von den zumindest zwei Sicherheitsprozessen und dem Anwendungsprozess zumindest zwei Prozesse auf dem Prozessor zumindest teilweise nebenläufig ausgeführt werden und die Ausführung des Anwendungsprozesses bereits begonnen wird, wenn zumindest ein Sicherheitsprozess ein Vorliegen der Voraussetzung zur Ausführung des Anwendungsprozesses festgestellt hat.

Der Prozessor führt dann zumindest zwei Prozesse durch alternierendes Zuweisen von Rechenzeit scheinbar gleichzeitig aus, so dass der Eindruck der parallelen Ausführung der beiden Prozesse entsteht. Bei der vorliegenden Erfindung braucht der Anwendungsprozess nicht erst dann gestartet werden, wenn die Voraussetzung zur Ausführung des Anwendungsprozesses von den zumindest zwei Sicherheitsprozessen übereinstimmend festgestellt wurde, d.h. wenn alle Sicherheitsprozesse beendet sind, sondern kann bereits nach Beendigung eines Sicherheitsprozesses begonnen werden. Es kann also insbesondere vorkommen, dass mit der Ausführung des Anwendungsprozesses bereits begonnen wird, wenn zumindest einer der Sicherheitsprozesse noch nicht beendet ist.

Der Vorteil dieser Erfindung liegt in einer effizienzsteigernd wirkenden zeitlichen Optimierung der Ausführung des von den Sicherheitsprozessen abhängigen Anwendungsprozesses durch die nebenläufige Prozessabarbeitung und die vorzeitige Ausführung des Anwendungsprozesses, so dass der Anwendungsprozess früher ausgeführt werden kann als bei einer streng sequentiellen Abarbeitung. Das erfindungsgemäße Vorgehen minimiert die Wahrscheinlichkeit, dass die Ausführungsvoraussetzung des Anwendungsprozesses nicht vorliegt, da der Anwendungsprozess erst nach Feststellen der Ausführungsvoraussetzung durch zumindest einen der Sicherheitsprozesse gestartet wird und die erstmalige Feststellung des Vorliegens der Voraussetzung in dem meisten Fällen von weiteren Sicherheitsprozessen bestätigt wird. Es können somit bereits Zwischen- oder Teilergebnisse des Anwendungsprozesses vorbehaltlich einer übereinstimmenden Feststellung der Voraussetzung vorzeitig erstellt werden oder auch Endergebnisse an eine Gegenstelle weitergegeben werden, mit welcher der Datenträger in Verbindung steht.

Da der Anwendungsprozess bereits nach Beendigung eines der Sicherheitsprozesse möglicherweise nebenläufig mit einem weiteren der Sicherheitsprozesse ausgeführt wird, ist es möglich, dass der Anwendungsprozess vor zumindest einem der Sicherheitsprozesse beendet wird und das Vorliegen der Voraussetzung zur Ausführung des Anwendungsprozesses somit erst übereinstimmend festgestellt werden kann, wenn Ergebnisse des Anwendungsprozesses bereits vorliegen. Um die Sicherheitsfunktion der Sicherheitsprozesse dennoch zu gewährleisten, werden die Ergebnisse des Anwendungsprozesses vorzugsweise erst weiterverarbeitet, nachdem die zumindest zwei Sicherheitsprozesse das Vorliegen der Voraussetzung zur Ausführung des Anwendungsprozesses übereinstimmend festgestellt haben.

Hierbei bezeichnet der Begriff "Anwendungsprozess" im Kontext der vorliegenden Erfindung nicht nur die Ausführung eines einzelnen Prozesses, sondern kann auch eine Folge von Anwendungsprozessen bezeichnen, die eine logische Einheit bilden oder eine gewünschte Anwendung durch ihre zusammenhängende Abfolge realisieren. In diesem Sinne umfasst der Begriff "Anwendungsprozess" jede Folge von Prozessen, die keine unwiderrufliche und/ oder unumkehrbare Außenwirkung entfalten. Solche Einzelprozesse oder Prozesssequenzen können insofern vorbehaltlich einer späteren Feststellung des Vorliegens ihrer Ausführungsvoraussetzung vorzeitig ausgeführt werden, da ihre Ergebnisse und Wirkungen falls nötig rückgängig gemacht werden können.

Durch diesen Vorbehalt des von allen Sicherheitsprozessen übereinstimmend festgestellten Vorliegens der Voraussetzung zur Ausführung des Anwendungsprozesses wird sichergestellt, dass die gewünschte Wirkung des Anwendungsprozesses erst dann endgültig und mit Wirkung nach Außen unwiderruflich umgesetzt wird, wenn die Ausführung des Anwendungsprozesses durch die Sicherheitsprozesse tatsächlich übereinstimmend autorisiert wurde. So ist es beispielsweise möglich, dass der Anwendungsprozess bereits Daten bei einer Gegenstelle anfordert oder an diese weitergibt und die Gegenstelle dann parallel zur Ausführung eines Sicherheitsprozesses durch den Datenträger bereits Berechnungsschritte unternimmt, die andernfalls erst nach vollständigem Beenden aller Sicherheitsprozesse durchgeführt werden könnten. Im Ergebnis tritt die erwünschte Wirkung des Anwendungsprozesses durch die zeitliche Optimierung der Ausführung der Sicherheitsprozesse sowie des Anwendungsprozesses früher ein.

Ein erfindungsgemäßer portabler Datenträger umfasst dementsprechend einen Prozessor, auf dem zumindest eine Sicherheitsapplikation und eine Anwendungsapplikation installiert sind, die jeweils von dem Prozessor als Prozesse ausführbar sind. Hierbei wird als Applikation ein auf dem Datenträger vorliegendes ausführbares Anwendungsprogramm bezeichnet, während eine von dem Prozessor ausgeführte Applikation als Prozess bezeichnet wird. Der Begriff "Anwendungsapplikation" ist insofern in gleicher Weise zu verstehen wie der oben erläuterte Begriff "Anwendungsprozess".

Der Datenträger umfasst ferner eine Datenkommunikationsschnittstelle zur Kommunikation des Datenträgers mit einer Gegenstelle, an die der Datenträger angeschlossen ist, und eine Steuereinrichtung, die als vom Prozessor ausführbares Programm, z.B. als Teil der Systemsoftware des Datenträgers, ausgestaltet sein kann. Die Steuereinrichtung übernimmt beim Ausführen von Prozessen auf dem Prozessor die alternierende Zuteilung von Prozessorzeit an die einzelnen Prozesse gemäß des oben beschriebenen Prinzips der nebenläufigen Ausführung von zumindest zwei der Sicherheitsprozesse und des Anwendungsprozesses. Die Steuereinrichtung kann ferner die von dem Anwendungsprozess bereits vor Vorliegen der übereinstimmend festgestellten Ausfüluungsvoraussetzung erzielten Ergebnisse erst dann umsetzen, wenn die übereinstimmende Ausführungsvoraussetzung vorliegt, so dass die Wirkung des Anwendungsprozesses nach außen erst eintritt, wenn die Voraussetzung tatsächlich mehrfach geprüft ist.

Als sicherheitsrelevante Voraussetzung zur Ausführung des Anwendungsprozesses wird vorzugsweise eine Berechtigung des Anwendungsprozesses zur Ausführung geprüft. Eine solche Ausführungsberechtigung kann z.B. eine biometrische oder sonstige Authentisierung oder Identifizierung eines Benutzers des Datenträgers sein.

Die zumindest zwei auszuführenden Sicherheitsprozesse können entweder durch Ausführen einer einzigen im Speicher des portablen Datenträgers vorliegenden Sicherheitsapplikation entstehen, so dass die Sicherheitsprozesse eine Sicherheitsoperation redundant durchführen. Andererseits ist es auch möglich, dass unterschiedliche Sicherheitsapplikationen auf dem Datenträger vorliegen und als verschiedene Sicherheitsprozesse ausgeführt werden, so dass eine Ausführungsvoraussetzung oder -berechtigung des Anwendungsprozesses auf jeweils unterschiedliche Weise geprüft wird. Dies ist z.B. der Fall, wenn verschiedene biometrische Merkmale eines Benutzers zur Authentisierung geprüft werden, z.B. ein Fingerabdruck und ein Irismuster. Üblicherweise werden dann biometrische Merkmale des Benutzers mittels einer adäquaten Sensoreinrichtung an der Gegenstelle erhoben und mit auf dem Datenträger vorliegenden biometrischen Referenzdaten verglichen. Auch der Abgleich einer vom Benutzer bereitgestellten Zugangskennung mit einer auf dem Datenträger vorliegenden Referenzkennung kann als Sicherheitsprozess durchgeführt werden. Die Ausführungsberechtigung wird dem Anwendungsprozess dann erteilt, wenn Benutzer- und Referenzdaten jeweils (innerhalb bestimmter datenabhängigen Toleranzgrenzen) übereinstimmen.

Da der portable Datenträger bei seinem Einsatz in der Regel mit einer Gegenstelle verbunden ist, beispielsweise einem Lese-/Schreibterminal, wird der Anwendungsprozess oder seine Ergebnisse eine gewünschte Reaktion der Gegenstelle veranlassen, falls der portable Datenträger mit der Gegenstelle verbunden ist. Falls der portable Datenträger beispielsweise eine Konto- oder Bankchipkarte und die Gegenstelle ein Bank- oder Geldautomat sind, kann die Reaktion der Gegenstelle das Ausführen einer Kontotransaktion oder das Auszahlen eines Bargeldbetrags sein.

In Kontext der vorliegenden Erfindung können Ergebnisse eines Anwendungsprozesses beispielsweise Daten sein, die der Prozess in einen prozessabhängigen oder temporären Speicherbereich schreibt, oder vom Prozessor des Datenträgers auszuführende oder an die Gegenstelle zu übertragende Anweisungen des Anwendungsprozesses, wie z.B. das Starten anderer Applikationen. Die Steuereinrichtung kann dann so eingerichtet sein, dass die Weiterverarbeitung von Ergebnissen des Anwendungsprozesses darin besteht, die Ergebnisse über die Schnittstelle des Datenträgers an die Gegenstelle zu übermitteln. Gemäß dem obigen Beispiel der Bankchipkarte kann ein Ergebnis des Anwendungsprozesses z.B. in dem Zusammenstellen und Übertragen von kontobezogenen Daten an die Gegenstelle bestehen. Der Anwendungsprozess kann also bereits vor einer übereinstimmenden Feststellung der Ausführungsvoraussetzung sämtliche Ergebnisse erzeugen - d.h. die Kontodaten zusammenstellen und/oder formatieren -, während die Wirkung des Anwendungsprozesses nach außen - also die Übertragung der Daten an die Gegenstelle - erst erfolgt, wenn die Voraussetzung von allen Sicherheitsprozessen übereinstimmend festgestellt wurde.

Ebenso ist es im Sinne der vorliegenden Erfindung möglich, dass die Steuereinrichtung des Datenträgers die von dem Anwendungsprozess ermittelten Ergebnisse bereits zur Weiterverarbeitung durch die Gegenstelle an diese überträgt und der Gegenstelle im wesentlichen gleichzeitig eine für die Gegenstelle verständliche Vorbehaltsanweisung übermittelt wird, welche die Gegenstelle veranlasst, die bei der Weiterverarbeitung der Ergebnisse des Anwendungsprozesses erzielten Weiterverarbeitungsergebnisse erst dann umzusetzen, wenn der Gegenstelle die übereinstimmende Feststellung der Berechtigung mitgeteilt wurde. Auf diese Weise kann die Gegenstelle zwar vorbehaltlich einer später zu empfangenden übereinstimmenden Feststellung der Ausführungsvoraussetzung Ergebnisse des Anmeldungsprozesses weiterverarbeiten und insofern parallel zu den verbleibenden Sicherheitsprozessen arbeiten, die Verarbeitungsergebnisse können jedoch erst dann mit Außenwirkung umgesetzt werden, wenn der Gegenstelle die übereinstimmend festgestellte Voraussetzung vorliegt.

Nachdem alle Sicherheitsprozesse auf dem Datenträger beendet wurden und die Ausführungsberechtigung des Anwendungsprozesses übereinstimmend festgestellt haben, übermittelt der portable Datenträger eine Umsetzungsanweisung an die Gegenstelle, welche der Gegenstelle signalisiert, dass die Voraussetzung übereinstimmend festgestellt wurde und die bisher unter Vorbehalt erzielten Weiterverarbeitungsergebnisse weitergenutzt, ausgewertet oder anderweitig umgesetzt werden können.

Übertragen auf das obige Beispiel einer Bankchipkarte bedeutet das, dass zwar die von dem Anwendungsprozess zusammengestellten kontobezogenen Daten an den Geldautomat übertragen werden können und der Geldautomat auch bereits die beabsichtigte Transaktion vorbereiten kann, die Transaktion allerdings erst wirksam ausgeführt wird, wenn bei dem Geldautomat eine Umsetzungsanweisung des Datenträgers eintrifft, welche eine übereinstimmende Feststellung der Voraussetzung bestätigt. Die Transaktion wird dann wirksam ausgeführt, indem z.B. ein Geldbetrag ausgezahlt wird oder eine Überweisung angewiesen wird.

Beim nebenläufigen Ausführen der beiden Sicherheitsprozesse ist es vorteilhaft, einem der Sicherheitsprozess eine höheren Ausführungspriorität zuzuweisen. Dieser Sicherheitsprozess wird dann aufgrund der ihm zugewiesenen erhöhten Prozessorzeit schneller beendet und der Anwendungsprozess kann früher gestartet werden. Ebenso ist es beim nebenläufigen Ausführen des Anwendungsprozesses und eines Sicherheitsprozesses vorteilhaft, wenn die Steuereinrichtung dem Anwendungsprozess eine höhere Ausführungspriorität und dem nebenläufigen Sicherheitsprozess eine niedrigere Ausführungspriorität gewährt.

Bei einer Ausführungsalternative der vorliegenden Erfindung ist es möglich, dass zumindest zwei Sicherheitsprozesse von der Steuereinrichtung nebenläufig gestartet werden und das Ausführen der Anwendungsapplikation als nebenläufiger Anwendungsprozess begonnen wird, sobald von zumindest einem Sicherheitsprozess die Ausführungsvoraussetzung des Anwendungsprozesses festgestellt wurde. Dabei ist es auch möglich, den Beginn der Ausführung der Sicherheitsprozesse auf dem Prozessor von der Steuereinrichtung im wesentlichen gleichzeitig zu veranlassen, wobei es wiederum möglich ist, den Sicherheitsprozessen entweder gleiche oder zumindest ähnliche Ausführungsprioritäten zuzuweisen oder unterschiedliche Ausführungsprioritäten zuzuweisen, um bestimmte Sicherheitsprozesse bevorzugt auszuführen. Zum Beispiel kann derjenige Sicherheitsprozess mit hoher Ausführungspriorität ausgeführt werden, der die geringste Fehlerwahrscheinlichkeit besitzt, so dass für den danach startenden Anwendungsprozess eine hohe Wahrscheinlichkeit für das tatsächliche Vorliegen der Voraussetzung angenommen werden kann.

Für den Fall, dass von einem der Sicherheitsprozesse die Ausführungsvoraussetzung des Anwendungsprozesses nicht festgestellt werden kann und der Anwendungsprozess zu diesem Zeitpunkt bereits Ergebnisse erzeugt hat, bricht die Steuereinrichtung die Ausführung des Anwendungsprozesses ab, da dessen Ausführungsberechtigung bereits dann zweifelhaft ist oder eine Manipulation des Datenträgers vorliegen kann, wenn nur ein Sicherheitsprozess die Ausführungsberechtigung verweigert. In diesem Fall werden bereits erzielte Zwischen-, Teil- oder Endergebnisse des Anwendungsprozesses verworfen und alle Ergebnisse einer Weiterverarbeitung rückgängig bemacht. Bei einer zusammenhängenden oder eine logische Einheit bildenden Sequenz von Anwendungsprozessen wird der aktuell ausgeführte Anwendungsprozess mit einer Fehlermeldung beendet, so dass Zwischenergebnisse ohnehin rückgängig gemacht und nachfolgende Prozesse fehlerbedingt beendet werden.

Falls bereits Ergebnisse an eine Gegenstelle übertragen wurden und diese von der Gegenstelle bereits weiterverarbeitet wurden, werden die Weiterverarbeitungsergebnisse der Gegenstelle entweder aufgrund einer entsprechenden Anweisung des Datenträgers oder aufgrund des Ausbleibens der Umsetzungsanweisung ebenfalls verworfen.

Wie bereits erwähnt, kommen als Anwendungsapplikationen des portablen Datenträgers unter anderem Konto- oder Geldtransaktionsapplikationen in Frage, die auf der Gegenstelle eine Kontotransaktion veranlassen. Ebenso kann eine Anwendungsapplikation bei der Gegenstelle eine Zugangsberechtigung zu einem zugangsbeschränkten Bereich oder Gebäude für einen Benutzer des portablen Datenträgers anfordern oder eine Datenbankoperation bzw. -anfrage an die Gegenstelle richten.

Der portable Datenträger ist vorzugsweise mit einem Multitasking- und/oder Multithreading-fähigen Betriebssystem ausgestattet, das eine Mehrläufigkeit von Prozessen explizit unterstützt. Die Steuereinrichtung kann hierbei als Disponent ("Scheduler") des Betriebssystems ausgestaltet sein, der den von dem Prozessor auszuführenden Prozessen nach vorgegebenen Kriterien Prozessorzeit zuweist.

Besonders bevorzugt handelt es sich bei dem portablen Datenträger um eine Chipkarte mit Prozessor (d.h. eine sogenannte "Smart Card"), eine sichere Multimediakarte, ein USB-Speichermedium, eine Mobilfunkkarte oder dergleichen.

Weitere Merkmale und Vorteile der Erfindung ergeben sich aus der folgenden Beschreibung verschiedener erfindungsgemäßer Ausführungsbeispiele und Ausführungsalternativen im Zusammenhang mit den begleitenden Zeichnungen. Darin zeigen:
- Figur 1: eine erfindungsgemäß eingerichtete Chipkarte;
- Figur 2: Beispiele für Strategien zur Prozessabarbeitung gemäß der vorliegenden Erfindung; und
- Figur 3: eine erfindungsgemäß eingerichtete Chipkarte in Interaktion mit einer Gegenstelle.

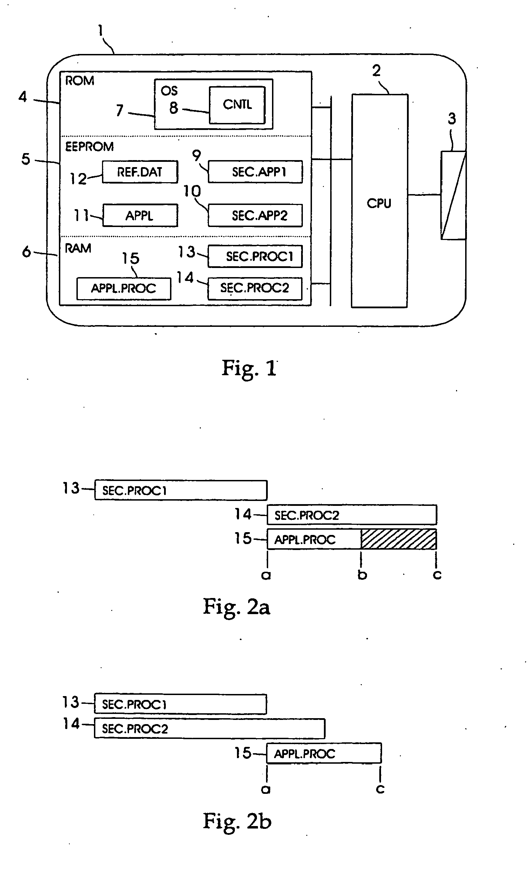

Figur 1 zeigt eine Chipkarte 1 als erfindungsgemäßen portablen Datenträger. Die Chipkarte 1 ist mit einem Prozessor 2 zur Ausführung von Systemroutinen und Applikationen und einer Schnittstelle 3 zur Datenkommunikation mit externen Geräten ausgestattet, wie z.B. einer Kartenleseeinrichtung oder einem Transaktionsterminal. Ebenso kann es sich bei einem erfindungsgemäßen portablen Datenträger um eine Mobilfunkkarte, ein USB-Speichermedium, eine sichere Multimediakarte oder dergleichen handeln.

Die Chipkarte 1 der Figur 1 umfasst ferner eine Speicheranordnung 4, 5, 6 bestehend aus einem permanenten ROM-Speicher 4, einem wiederbeschreibbaren EEPROM-Speicher 5 und einem flüchtigen RAM-Arbeitsspeicher 6. Im ROM-Speicher 4 ist ein Betriebssystem 7 der Chipkarte 1 implementiert, welches eine Steuereinrichtung 8 zur Prozesssteuerung umfasst. Zur Realisierung der vorliegenden Erfindung unterstützt das Betriebssystem 7 ein "Multitasking"; also das scheinbar gleichzeitige ausführen mehrere Aufgaben ("tasks") bzw. Prozesse. Dabei werden den verschiedenen Prozessen gemäß ihrer Ausführungsprioritäten in so kurzen Abständen alternierend Prozessorszeit zugewiesen, dass der Eindruck der Gleichzeitigkeit/Parallelität entsteht. Diese Quasi-Parallelität wird allgemein als "Nebenläufigkeit" bezeichnet. Ebenso ist eine "Multihreading"-Fähigkeit des Betriebssystems 7 vorteilhaft, also der Fähigkeit eines Prozesses, mehrere Bearbeitungsstränge ("threads", Subprozesse) nebenläufig abzuarbeiten.

Neben den im Betriebssystem 7 zusammengefassten Systemroutinen sind im EEPROM-Speicher 5 der Chipkarte 1 verschiedene Applikationen 9,10,11 und Daten 12 abgelegt. Die Sicherheitsapplikationen 9, 10 führen sicherheitsrelevante Prüfungen durch, wie zum Beispiel ein Überprüfen einer Authentisierung oder Identifizierung eines Benutzers der Chipkarte 1, während die Anwendungsapplikation 11 ein beliebiges Anwendungsprogramm ist, welches beispielsweise Daten oder Anweisungen an eine Gegenstelle überträgt, mit der die Chipkarte 1 über ihre Schnittstelle 3 in einer Datenkonununikationsverbindung steht. Hierbei kann die Anwendungsapplikation 15 auch eine Folge von Applikationen, Routinen, Programmen oder Funktionen repräsentieren, die eine logische oder funktionale Einheit bilden oder zusammenhängend ausgeführt werden um eine bestimmte Anwendung zu realisieren. Falls es sich bei der Chipkarte 1 um eine Geld- oder Kontokarte handelt, kann die Anwendungsapplikation 11 beispielsweise kontobezogene Daten an die Gegenstelle, z.B. einen Geld- oder Kontoautomaten, übertragen. Falls es sich um eine Identifikationskarte oder eine Zugangskarte handelt, kann die Anwendungsapplikation 11 persönliche Daten des Benutzers an die Gegenstelle übertragen, damit sie dort zum Beispiel für eine Ausweiskontrolle oder die Überprüfung einer Zugangsberechtigung des Benutzers zu einem geschützten Bereich oder Gebäude verwendet werden.

Bei portablen Datenträgern wie der in Figur 1 abgebildeten Chipkarte 1 ist der eigentliche Mikrochip bzw. der Mikrocontroller für Dritte relativ leicht zugänglich in den Kunststoffrahmen der Chipkarte 1 eingebettet. Dasselbe gilt für andere portable Datenträger, wie sichere Multimediakarten, Mobilfunkkarten oder mit einem Prozessor ausgestattete USB-Speichermedien. Aufgrund des vergleichsweise einfachen Zugangs zu den funktionalen Komponenten derartiger Datenträger werden vielfältige Angriffs- und Manipulationsmöglichkeiten eröffnet, die eine besondere Absicherung geheimer Daten und sicherheitsrelevanter Prozesse von portablen Datenträgern erfordern. Diese Gefährdung besteht insbesondere bei portablen Datenträgern, die besondere Sicherungsinformationen bereitstellen, wie zum Beispiel Zugangskarten, Konto- oder Kreditkarten und dergleichen.

Die Zielrichtungen derartiger Angriffe sind vielfältig. Zum Beispiel kann es ein Ziel sein, durch Manipulation einem prinzipiell nicht berechtigten Benutzer der Chipkarte 1 einen Zugang zu einem ihm normalerweise unzugänglichen Bereich zu eröffnen oder bestimmte sicherheitsrelevante Informationen der Chipkarte 1 auszuspähen, wie zum Beispiel eine Zugangskennung/PIN oder einen kryptographischen Schlüssel. Hierbei zielen physikalische Angriffsmöglichkeiten wie zum Beispiel Lichtangriffe oder Bellcore-Angriffe darauf ab, eine Manipulation der Chipkarte während des Betriebes durch physikalische Einwirkungen wie Strahlungseinwirkung, hohe Betriebsspannungen oder Übertaktungen herbeizuführen, um dadurch Rechenfehler zu provozieren. Solche Störungen im Programmablauf können teilweise sogar so gezielt eingesetzt werden, dass bestimmte Wirkungen hervorgerufen werden, z.B. die Veränderung von Datenpufferadressen bei Leseoperationen, um normalerweise unzugängliche Daten der Chipkarte auszulesen. Ebenso ist es durch gezielte Manipulation im Ablauf von kryptographischen Algorithmen möglich, aus den Ergebnissen manipulierter Algorithmen im Vergleich mit den Ergebnissen unmanipulierter Algorithmen Rückschlüsse auf verwendete Schlüssel zu gewinnen.

Ein möglicher, relativ leicht zu realisierender Schutz gegen derartige externe Manipulationen ist die doppelte oder mehrfache Ausführung von Sicherheitsapplikationen 9, 10, die mittels einer sicherheitsrelevanten Prüfung eine Voraussetzung zur Ausführung einer Anwendungsapplikation 11 prüfen, wie z.B. eine durch Authentisierung oder Identifikation eines Benutzers nachzuweisende Ausführungsberechtigung der Anwendungsapplikation 11. Falls eine Sicherheitsapplikation 9, 10 bei ihrer Ausführung als Sicherheitsprozess 13,14 manipuliert wird, kann das durch einen Vergleich mit den Ergebnissen der Ausführung der gleichen oder anderer Sicherheitsapplikationen 9, 10 festgestellt werden. Die Steuereinrichtung 8 der Chipkarte 1 lässt dann die weitere Ausführung einer Anwendungsapplikation 11 als Anwendungsprozess 15 nur zu, wenn die Ergebnisse der Sicherheitsapplikationen 9, 10 übereinstimmen, da nicht übereinstimmende Ergebnisse unmittelbar auf Manipulationen hindeuten.

So ist es beispielsweise möglich, eine Sicherheitsapplikation 9 der Chipkarte 1 durch das Betriebssystem 7 oder dessen Steuereinrichtung 8 als zwei redundante Sicherheitsprozesse 13 und 14 durchzuführen und deren Ergebnisse anschließend zu vergleichen. Ein solcher Sicherheitsprozess 13, 14 kann beispielsweise die Überprüfung von vom Benutzer bereitgestellten Authentisierungsdaten mit im EEPROM-Speicher 5 der Chipkarte 1 hinterlegten Referenzdaten 12 umfassen. Falls eine solche Authentisierung durch zwei identische Sicherheitsprozesse 13 und 14 übereinstimmende positive Ergebnisse erbringt, ist die Voraussetzung zur Ausführung der Anwendungsapplikation 11 gegeben, welche anschließend von der Steuereinrichtung 8 als Anwendungsprozess 15 auf dem Prozessor 2 der Chipkarte 1 ausgeführt wird. Ebenso ist es möglich, dass zwei verschiedene Sicherheitsapplikationen 9, 10 ausgeführt werden, indem beispielsweise die Sicherheitsapplikation 9 ein biometrisches Merkmal des Benutzers mit biometrischen Referenzdaten 12 vergleicht und eine Sicherheitsapplikation 10 eine vom Benutzer bereitgestellte Zugangskennung oder PIN-Nummer mit einer auf der Chipkarte 1 hinterlegten Referenznummer 12 vergleicht.

Da es sich bei portablen Datenträgern wie zum Beispiel der Chipkarte 1 um in ihren Rechenkapazitäten relativ eingeschränkte Systeme handelt, kann das sequentielle zwei- oder mehrfache Ausführen eines mitunter relativ rechenaufwendigen Authentisierungsverfahrens durch zwei separate Sicherheitsprozesse 13,14 zu inakzeptablen Rechenzeiten bei der Ausführung der Anwendungsapplikation 15 führen. Dies ist insbesondere dann relevant, wenn solche Sicherheitsüberprüfungen von portablen Datenträgern im Rahmen von Massenabfertigungen auf Flughäfen, Bahnhöfen oder Großveranstaltungen durchgeführt werden müssen. Es ist insofern sinnvoll, eine Möglichkeit zu schaffen, eine in Form eines Anwendungsprozesses 15 von dem Prozessor 2 ausgeführte Anwendungsapplikation 11 bereits zu starten, bevor die Ausführungsvoraussetzung der Anwendungsapplikation 11 durch sämtliche Sicherheitsprozesse 13, 14 bestätigt wird.

Figur 2 zeigt verschiedene Ausführungsalternativen der vorliegenden Erfindung, welche dieses Ziel mit Hilfe von zeitlicher Prozessoptimierung erreichen. Das gemeinsame Prinzip der drei in Figur 2 illustrierten Prozessausführungsstrategien ist, eine vorzeitige Ausführung eines Anwendungsprozesses 15 bereits zu ermöglichen, d.h. bevor die Sicherheitsprozesse 13, 14 übereinstimmend das Vorliegen der Voraussetzung zur Ausführung des Anwendungsprozesses 15 festgestellt haben. Dieses Prinzip ist nicht nur auf den Fall eines von einem Authentisierungsprozess abgesicherten Anwendungsprozesses anwendbar, sondern prinzipiell auf jeden Prozess, der in seiner Ausführung von Ergebnissen anderer Prozesse abhängig ist.

Bei der in Figur 2a skizzierten Ausführungsalternative wird zunächst ein Sicherheitsprozess 13 von der Steuereinrichtung 8 gestartet. Wenn der Sicherheitsprozess 13 zum Zeitpunkt a das Vorliegen einer Ausführungsvoraussetzung des Anwendungsprozesses 15 feststellt, werden im Anschluss der zweite Sicherheitsprozess 14 und der Anwendungsprozess 15 von der Steuereinrichtung 8 im wesentlichen gleichzeitig zum Zeitpunkt a nebenläufig gestartet. Der Anwendungsprozess 15 wird also gestartet, bevor auch die Feststellung der Voraussetzung durch den zweiten Sicherheitsprozess 14 vorliegt.

Bei dem nebenläufigen quasi-parallelen Ausführen der Prozesse 14, 15 weist die Steuereinrichtung 8 den jeweils nebenläufig auszuführenden Prozessen 14,15 abhängig von vorgegebenen oder einstellbaren Ausführungsprioritäten Rechenzeit des Prozessors zu und steuert dadurch die Abarbeitungsgeschwindigkeit der beiden Prozesse 14,15. Falls dem Anwendungsprozess 15 eine hohe Priorität eingeräumt wird und dem Sicherheitsprozess 14 eine niedrige Priorität, erhält der Anwendungsprozess 15 entsprechend mehr Rechenzeit des Prozessors zugewiesen als der Sicherheitsprozess 14. Durch diese Bevorzugung kann der Anwendungsprozess schneller ausgeführt werden als der nebenläufig ausgeführte Sicherheitsprozess 14.

Die diesem Vorgehen zugrunde liegende Überlegung ist, dass durch das Feststellen des Vorliegens der Ausführungsvoraussetzung eines Anwendungsprozesses 15 von zumindest einem Sicherheitsprozess 13 bereits ein starkes Indiz einer tatsächlichen Ausführungsberechtigung des Anwendungsprozesses 15 vorliegt, welches durch die weiter auszuführenden Sicherheitsprozesse 14 wahrscheinlich bestätigt wird. Falls also eine erste Ausführungsberechtigung vorliegt, ist die Wahrscheinlichkeit, dass Ergebnisse eines unberechtigt ausgeführten Anwendungsprozesses 15 revidiert werden müssen, relativ gering.

Im den Beispielen der Figur 2 repräsentiert der. Zeitpunkt a den Zeitpunkt, zu dem der Anwendungsprozess 15 gestartet werden kann, weil der Sicherheitsprozess 13 eine erste Voraussetzung festgestellt hat. Der Zeitpunkt b repräsentiert die Beendigung des Anwendungsprozesses 15 und das vollständige Vorliegen der Ergebnisse des Anwendungsprozesses 15, die beispielsweise in Form von ermittelten und an eine Gegenstelle zu übertragenden Daten oder bestimmten Anweisungen zur Ausführung anderer Applikationen der Chipkarte 1 oder einer Gegenstelle bestehen können.

Da der Sicherheitsprozess 14 zum Zeitpunkt b noch nicht beendet ist und insofern die Ausführungsvoraussetzung noch nicht von allen Sicherheitsprozessen 13,14 übereinstimmend festgestellt wurde, können diese Ergebnisse zum Zeitpunkt b jedoch zumindest dann nicht ungesetzt und/ oder weiterverarbeitet werden, wenn diese Weiterverarbeitung eine unwiderrufliche und unumkehrbare Außenwirkung entfalten würde, z.B. das Abschließen einer Kontotransaktion. In dem schraffiert dargestellten Zeitintervall zwischen den Zeitpunkten b und c hat der Anwendungsprozess 15 bereits Ergebnisse vorgelegt, die jedoch aus Sicherheitsgründen noch nicht weiterverarbeitet und umgesetzt werden können. Dies geschieht erst wenn auch der zweite Sicherheitsprozess 14 die Ausführungsberechtigung des Anwendungsprozesses 15 festgestellt hat und die Ergebnisse des Anwendungsprozesses 15 insofern verifiziert sind.

Die in Figur 2b skizzierte Ausführungsalternative zeigt ein Szenario, bei dem die beiden Sicherheitsprozesse 13,14 im wesentlichen gleichzeitig von der Steuereinrichtung 8 auf dem Prozessor 2 gestartet und nebenläufig ausgeführt werden. Hierbei ist es einerseits möglich, nahezu gleiche Ausführungsprioritäten einzurichten. Es kann jedoch sinnvoller sein, die Ausführungsprioritäten der Sicherheitsprozesse 13, 14 unterschiedlich zu gestalten, damit zumindest einer der Sicherheitsprozesse 13,14 schnell beendet wird, um den Anwendungsprozess 15 anschließend möglichst frühzeitig starten zu können. Sinnvoll ist dies beispielsweise bei Sicherheitspirozessen 13, 14, die verschiedene Sicherheitsprüfungen realisieren, z.B. eine Fingerabdruckprüfung und die Überprüfung einer PIN. Es kann dann nämlich von der Steuereinrichtung demjenigen Prozess eine höhere Priorität zugeteilt werden, dessen Ergebnis verlässlicher ist, im genannten Beispiel also dem die biometrische Überprüfung durchführenden Sicherheitsprozess.

Bei der Ausführungsalternative der Figur 2b wird der Sicherheitsprozess 13 zum Zeitpunkt a mit der Feststellung eines Vorliegens der Ausführungsvoraussetzung beendet, so dass der Anwendungsprozess 15 zum Zeitpunkt a nebenläufig mit dem noch bearbeiteten Sicherheitsprozess 13 gestartet werden kann. Während der Abarbeitung des Anwendungsprozesses 15 wird auch der Sicherheitsprozess 14 beendet und es liegt bei Beendigung des Anwendungsprozesses 15 zum Zeitpunkt c eine übereinstimmend festgestellte Berechtigung vor, so dass die Ergebnisse des Anwendungsprozesses 15 sofort weiterverarbeitet werden können.

Da der Anwendungsprozess 15 wie in dem Beispiel der Figur 2a bereits vor Vorliegen einer übereinstimmend festgestellten Berechtigung (Zeitpunkt c) beendet wird (Zeitpunkt b), ist es möglich, dass ein noch nicht beendeter Sicherheitsprozess 14 später zu dem Ergebnis kommt, dass die Ausführungsvoraussetzung des Anwendungsprozesses 15 nicht vorliegt, so dass bereits Ergebnisse des Anwendungsprozesses 15 vorliegen. Diese Ergebnisse dürfen nur dann vor Beendigung des zweiten Sicherheitsprozesses 14 weiterverarbeite werden, wenn sie keine unwiderrufliche Wirkung nach Außen haben, die im Falle eines negativen Ergebnisses des zweiten Sicherheitsprozesses 14 dann nicht mehr rückgängig gemacht werden könnte. In diesem Fall werden alle Ergebnisse des Anwendungsprozesses 15 (z.B. geschriebenen Daten) eliminiert und sämtliche vorbehaltlich einer späteren übereinstimmend festgestellten Voraussetzung ausgeführten Schritte des Anwendungsprozesses 15 werden derart rückgängig gemacht, dass der Zustand der Chipkarte 1 vor Beginn des Anwendungsprozesses 15 (Zeitpunkt a) wieder hergestellt wird.

Falls der Anwendungsprozess 15 eine Prozesssequenz ist, die eine logische/ funktionale Einheit bildet, wird bei einem negativen Ergebnis des zweiten Sicherheitsprozesses 14 eine Fehlermeldung an den aktuell ausgeführten Prozess der Sequenz gemeldet, der dadurch zusammen mit allen Subroutinen und Unterprogrammen beendet wird. Gleichzeitig werden die Ergebnisse der bisher ausgeführten Prozesse rückgängig gemacht, was praktischerweise durch eine Betriebsystemroutine der Chipkarte 1 erledigt werden kann.

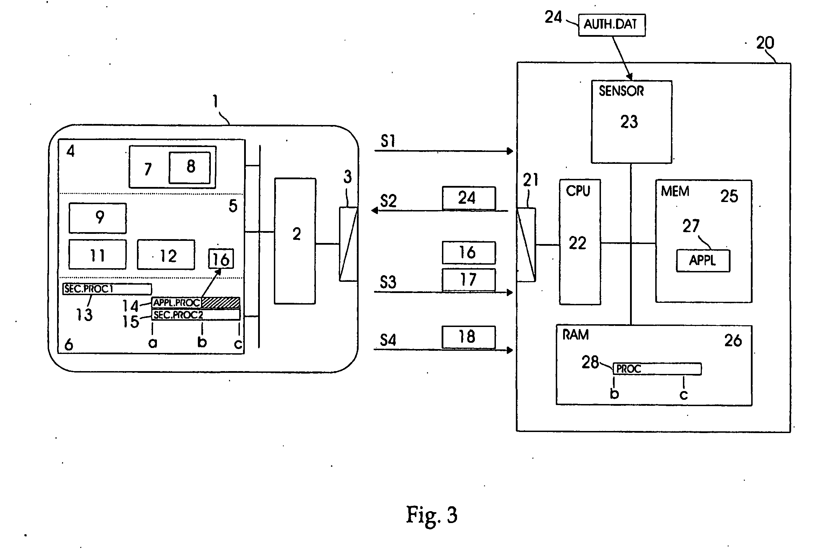

Figur 3 illustriert eine Interaktion zwischen einer Chipkarte 1 und einer Gegenstelle 20, beispielsweise einem Geldkartenterminal oder einer sonstigen Chipkartenleseeinrichtung zur Identifikation eines Benutzers der Chipkarte 1. Die Steuereinrichtung 8 nimmt hierbei diejenige Prozesssteuerung vor, die in dem oberen Beispiel der Figur 2 illustriert ist.

Ein Benutzer, der mit seiner Chipkarte 1 eine Dienstleistung der Gegenstelle 20 in Anspruch nehmen möchte oder sich gegenüber der Gegenstelle 20 zur Vornahme der Dienstleistung identifiziert, beginnt den Vorgang mit dem Anschließen der Chipkarte 1 an die Gegenstelle 20. Dies wird in der Regel durch Einführen der Chipkarte 1 in eine Kartenleseeinrichtung der Gegenstelle 20 durchgeführt, wodurch eine Datenkommunikationsverbindung zwischen korrespondierenden Schnittstellen 3, 21 der Chipkarte 1 und der Gegenstelle 20 hergestellt wird.

In Schritt S1 wird zunächst ein bestimmtes Signal von der Chipkarte 1 oder ihrer Steuereinrichtung 8 an die Gegenstelle 20 gesendet, um dort den gesamten Vorgang des Inanspruchnehmens einer Dienstleistung oder Identifizierens des Benutzers zu initiieren. Die Dienstleistung wird von der Chipkarte 1 durch Ausführen der Anwendungsapplikation 11 vorbereitet, um die Dienstleistung anschließend bei der Gegenstelle 20 zu bewirken. Falls die Chipkarte 1 beispielsweise eine Konto- oder Bankkarte und die Gegenstelle 20 ein Bank- oder Geldautomat sind, kann die bewirkte Dienstleistung eine Geldüberweisung oder das Auszahlen eines Bargeldbetrags sein. Die Anwendungsapplikation 11 bereitet die Dienstleistung dann vor, indem Kontodaten des Benutzers an die Gegenstelle 20 übertragen werden. Falls die Chipkarte 1 eine reine Identifikationskarte ist und die Gegenstelle 20 eine Zugangseinrichtung, die autorisierten Personen einen Zugang zu einem Raum oder Gebäude gewährt, oder eine Identifikationseinrichtung ist, die im Rahmen z.B. einer Grenzabfertigung oder polizeilichen Überprüfung eine Personalienüberprüfung durchführt, besteht die Dienstleistung darin, den Zugang freizuschalten oder die Grenzabfertigung durchzuführen. Die Anwendungsapplikation 11 überträgt dann zum Einleiten der Dienstleistung persönliche Identifikationsdaten an die Gegenstelle 20. Im Rahmen der Durchführung der vom Benutzer der Chipkarte gewünschten Dienstleistung kann die Gegenstelle 20 auch Daten an die Chipkarte 1 übertragen, z.B. wenn die Gegenstelle 20 eine zugangsbeschränkte Datenbank ist, die mittels der Chipkarte 1 abgefragt werden kann.

Im Beispiel der Figur 3 werden in Reaktion auf das initiale Signal der Chipkarte 1 in Schritt S1 Authentisierungsdaten 24 des Benutzers der Chipkarte 1 erhoben, die von den Sicherheitsprozessen 13,14 benötigt werden, um die Ausführungsberechtigung der Anwendungsapplikation 14 festzustellen. Dies kann beispielsweise dadurch geschehen, dass biometrische Daten des Benutzers, beispielsweise ein Irismuster, ein Fingerabdruck, ein Gesichtsportrait oder ein Stimmprofil, mittels geeigneten optischen, akustischen oder sonstigen Sensoren 23 erhoben werden und mittels eines Mustererkennungs- und/oder Merkmalsextraktionsprozesses in ein verarbeitbares digitales Datenformat transformiert werden.

Die von der Gegenstelle 20 erhobenen Authentisierungsdaten 24 werden in Schritt S2 an die Chipkarte 1 übertragen, um sie dort mittels der Sicherheitsprozesse 13, 14 mit auf der Chipkarte 1 hinterlegten Referenzdaten 12 zu vergleichen. Ein derartiges "On-Card-Matching", also das Abgleichen von Authentisierungs- und Referenzdaten 24, 12 auf der Chipkarte 1, wird mittels spezialisierter Authentisierungs- und/oder Vergleichsalgorithmen durchgeführt, die in Form einer Sicherheitsapplikation 9, 10 im EEPROM-Speicher 5 der Chipkarte 1 hinterlegt sind. Beispielsweise implementiert die

Sicherheitsapplikation 9 eine algorithmisch äufwändige Fingerabdrucksprüfung durch einen Vergleich von Vergleichsminutien 24 und Referenzminutien 12, während die Sicherheitsapplikation 10 eingerichtet ist, eine manuell eingegebene Kennzahl oder PIN mit einer Referenzkennzahl zu vergleichen.

Sobald die Authentisierungsdaten 24 vollständig auf der Chipkarte 1 vorliegen, startet die Steuereinrichtung 8 die Sicherheitsapplikation 9 als Sicherheitsprozess 13 auf dem Prozessor 2, um den Vergleich zwischen den Authentisierungsdaten 24 und den hinterlegten Referenzdaten 12 tatsächlich vorzunehmen. Die Prozesse 13,14,15 sind als Zeitdiagramme im RAM-Arbeitspeicher 6 illustriert, da der Prozessor für alle von ihm ausgeführten Prozesse 13,14,15 einen Arbeitsspeicherbereich belegt, in dem Verwaltungs- und Nutzdaten temporär abgelegt werden, die während der Ausführung anfallen.

Der Sicherheitsprozess 13 wird im Beispiel der Figur 3 von der Steuereinrichtung 8 mit der höchsten Priorität ausgeführt, um ihn durch Zuweisung der maximalen Prozessorzeit möglichst schnell abzuarbeiten. Falls der Sicherheitsprozess 13 die Ausführungsberechtigung feststellt, kann mit ausreichend hoher Wahrscheinlichkeit angenommen werden, dass die Ausführungsberechtigung auch tatsächlich gegeben ist und von dem zweiten (und gegebenenfalls weiteren) Sicherheitsprozess(en) 14 wahrscheinlich bestätigt wird. Die nebenläufige Ausführung des Anwendungsprozesses 15 bereits vor Vorliegen der von allen Sicherheitsprozessen 13, 14 übereinstimmend festgestellten Ausführungsvoraussetzung birgt somit nur ein vergleichsweise geringes Fehlerrisiko. Diese Variante der nebenläufigen Prozessabarbeitung (Fig. 2a) ist gegenüber den alternativen Varianten der Figur 2b insofern prozessökonomischer, da dort die zügige Ausführung des ersten Sicherheitsprozesses 13 durch die gleichzeitige nebenläufige Ausführung des zweiten Sicherheitsprozesses 14 verhindert wird.

Zum Zeitpunkt a liegt das Ergebnis des ersten Sicherheitsprozesses 13 in Form der Feststellung der Berechtigung zur Ausführung der Applikation 11 vor. Es werden nun der zweite Sicherheitsprozess 14 und der Anwendungsprozess 15 im Wesentlichen gleichzeitig von der Steuereinrichtung 8 gestartet und nebenläufig auf dem Prozessor 2 ausgeführt.

Die Wirkung des Anwendungsprozesses 15 umfasst ein Einleiten einer Kontotransaktion bei der Gegenstelle 20, indem im EEPROM-Speicher 5 vorliegende, persönliche und kontobezogene Daten des Benutzers zusammengetragen und gegebenenfalls in ein von der Gegenstelle 20 verarbeitbares Format formatiert werden, um sie als Transaktionsdaten an die Gegenstelle 20 zu übertragen. Zum Zeitpunkt b liegen schließlich die Ergebnisse 16 des Anwendungsprozesses 15 im EEPROM-Speicher 5 vor. Eine Weiterverarbeitung der Ergebnisse 16 sowohl von der Chipkarte 1 als auch von der Gegenstelle 20 - sofern sie keine unmittelbare Außenwirkung z.B. in Form einer Bargeldauszahlung entfaltet - kann nur vorbehaltlich der Feststellung der Ausführungsberechtigung auch durch den zweiten Sicherheitsprozess 14 durchgeführt werden. Falls der zweite Sicherheitsprozess 14 die Berechtigung abschließend verweigert, werden die Ergebnisse 16 gelöscht und sämtliche Schritte des Anwendungsprozesses 15 annulliert.

Im Beispiel der Figur 3 entfalten die Ergebnisse 16 des Anwendungsprozesses keine unmittelbare Außenwirkung, da diese lediglich zur Vorbereitung einer Transaktion durch die Gegenstelle 20 an diese übertragen werden. Da jedoch die Außenwirkung entfaltende Transaktion auf der Gegenstelle 20 nicht unwiderruflich umgesetzt werden darf, werden die Ergebnisse 16 zum Zeitpunkt b in Schritt 53 an die Gegenstelle 20 zusammen mit einer Vorbehaltsanweisung 17 übermittelt, die der Gegenstelle 20 signalisiert, dass bei der Weiterverarbeitung der Ergebnisse 16 erzielte Weiterverarbeitungsergebnisse noch nicht mit Außenwirkung umgesetzt werden dürfen, sondern zunächst der Empfang einer Umsetzungsanweisung 18 von der Chipkarte 1 abzuwarten ist.

Als Reaktion auf den Empfang der Ergebnisse 16 bzw. der Transaktionsdaten der Chipkarte 1 wird auf der Gegenstelle 20 eine im Speicher 25 liegende Applikation 27 als von dem Prozessor 22 auszuführender Prozess 28 gestartet. Der Prozess 28 bewirkte die gewünschte Transaktion mit Hilfe der empfangenen Transaktionsdaten 16 und möglicherweise weiterer Daten, die der Benutzer beispielsweise über ein Tastenfeld an der Gegenstelle 20 eingegeben hat, z.B. ein Überweisungsbetrag. Die Weiterverarbeitung der empfangenen Ergebnisse 16 durch den Prozess 28 kann von der Gegenstelle 20 bereits vorbereitet werden, z.B. indem die in Form von Transaktionsdaten vorliegenden Ergebnisse 16 bereits bestimmten Manipulationen unterzogen werden. Eine etwaiges Feststellen des Fehlens der Voraussetzung durch den Sicherheitsprozess 14 kann entweder durch eine explizite Verweigerungsanweisung der Chipkarte 1 gegenüber der Gegenstelle 20 ausgesprochen werden, woraufhin die Ergebnisse 16 und eventuelle Weiterverarbeitungsergebnisse der Gegenstelle 20 von dieser zu löschen sind, oder allein dadurch erfolgen, dass eine Umsetzungsanweisung 18 der Chipkarte 1 nicht bei der Gegenstelle 20 eintrifft oder nach einer vorgegebenen Wartezeit noch nicht eingetroffen ist.

Zum Zeitpunkt c wird die Ausführung des zweiten Sicherheitsprozesses 14 von dem Prozessor 2 der Chipkarte 1 mit der Feststellung der Ausführungsvoraussetzung beendet. Daraufhin veranlasst die Steuereinrichtung 8 die

Übertragung der Umsetzungsanweisung 18 an die Gegenstelle 20, um zu signalisieren, dass nunmehr die Voraussetzung zur Ausführung der Anwendungsprozesse 15; 28 übereinstimmend festgestellt wurden etwaige Weiterverarbeitungsergebnisse von der Gegenstelle 20 unwiderruflich umgesetzt werden können.

Eine im Speicher 25 der Gegenstelle 20 vorliegende Applikation 27 kann also insofern bereits zum Zeitpunkt b, also zu dem Zeitpunkt, zu dem die Ergebnisse 16 der Anwendungsapplikation 15 vorliegen, als Prozess 28 gestartet werden, eine endgültige Umsetzung der Weiterverarbeitungsergebnisse des Prozesses 28 erfolgt allerdings erst zum Zeitpunkt c.

## Patentansprüche

1. Verfahren zum Ausführen eines Anwendungsprozesses (15) auf einem portablen Datenträger (1) mit einem Prozessor (2), wobei zumindest zwei eine Voraussetzung für eine Ausführung des Anwendungsprozesses (15) prüfende Sicherheitsprozesse (13, 14) durch den Prozessor (2) ausgeführt werden, **dadurch gekennzeichnet, dass** von den zumindest zwei Sicherheitsprozessen (13,14) und dem Anwendungsprozess (15) zumindest zwei Prozesse mittels des Prozessors (2) zumindest teilweise nebenläufig ausgeführt werden und das Ausführen des Anwendungsprozesses (15) begonnen wird, wenn zumindest einer der zumindest zwei Sicherheitsprozesse (13,14) die Voraussetzung festgestellt hat und wenn zumindest einer der zumindest zwei Sicherheitsprozesse (13,14) noch nicht beendet ist und die zumindest zwei Sicherheitsprozesse (13,14) die gleiche Voraussetzung prüfen.

2. Verfahren nach Anspruch 1, **dadurch gekennzeichnet, dass** die zumindest zwei Sicherheitsprozesse (13, 14) als Voraussetzung eine Berechtigung zur Ausführung des Anwendungsprozesses prüfen.

3. Verfahren nach Anspruch 2, **dadurch gekennzeichnet, dass** bei der Ausführung der zumindest zwei Sicherheitsprozesse (13, 14) Authentisierungsdaten (24) eines Benutzers des Datenträgers (1) mit in einem Speicher (5) des Datenträgers (1) vorliegenden Referenzdaten (12) verglichen werden, wobei die Authentisierungsdaten (24) biometrische Merkmale und/ oder eine alphanumerische Kennung umfassen.

4. Verfahren nach einem der Ansprüche 1 bis 3, **dadurch gekennzeichnet, dass** die zumindest zwei Sicherheitsprozesse (13,14) nebenläufig ausgeführt werden.

5. Verfahren nach einem der Ansprüche 1 bis 4, **dadurch gekennzeichnet, dass**, nachdem die Voraussetzung von zumindest einem der zumindest zwei Sicherheitsprozesse (13, 14) festgestellt wurde, zumindest ein weiterer Sicherheitsprozess (14) und der Anwendungsprozess (15) nebenläufig ausgeführt werden.

6. Verfahren nach Anspruch 4 oder 5, **dadurch gekennzeichnet, dass** beim nebenläufigen Ausführen ein Sicherheitsprozess (13) oder der Anwendungsprozess (15) eine höhere Ausführungspriorität hat als der nebenläufig ausgeführte zumindest eine weitere Sicherheitsprozess (14).

7. Verfahren nach einem der Ansprüche 1 bis 5, **dadurch gekennzeichnet, dass** Ergebnisse (16) des Anwendungsprozesses (15) erst dann weiterverarbeitet werden, wenn die zumindest zwei Sicherheitsprozesse (13, 14) die Voraussetzung übereinstimmend festgestellt haben.

8. Verfahren nach Anspruch 7, **dadurch gekennzeichnet, dass** die Ergebnisse (16) des Anwendungsprozesses (15) das Ausgeben von Daten und/ oder das Erteilen einer Anweisung umfassen.

9. Verfahren nach Anspruch 7, **dadurch gekennzeichnet, dass** als Ergebnisse (16) des Anwendungsprozesses (15) eine Reaktion einer mit dem Datenträger (1) verbundenen Gegenstelle (20) veranlasst wird.

10. Verfahren nach Anspruch 9, **dadurch gekennzeichnet, dass** die Ergebnisse (16) des Anwendungsprozesses (15) weiterverarbeitet werden, indem die Ergebnisse (16) an die Gegenstelle (20) übermittelt werden, nachdem die Voraussetzung übereinstimmend festgestellt wurde.

11. Verfahren nach Anspruch 9, **dadurch gekennzeichnet, dass** die Ergebnisse (16) des Anwendungsprozesses (15) weiterverarbeitet werden, indem die Ergebnisse (16) an die Gegenstelle (20) übermittelt und von der Gegenstelle (20) weiterverarbeitet werden, wobei Weiterverarbeitungsergebnisse der Gegenstelle (20) erst umgesetzt werden, nachdem übereinstimmend die Voraussetzung festgestellt wurde.

12. Verfahren nach einem der Ansprüche 1 bis 11, **dadurch gekennzeichnet, dass** die Ausführung des Anwendungsprozesses (15) abgebrochen und/oder Ergebnisse (16) des Anwendungsprozesses (15) verworfen werden, wenn zumindest einer der zumindest zwei Sicherheitsprozesse (13,14) eine Voraussetzung abschließend nicht festgestellt hat.

13. Portabler Datenträger (1) mit einem Prozessor (2), umfassend eine Steuereinrichtung (8), zumindest eine Sicherheitsapplikation (9, 10) und eine Anwendungsapplikation (11), die von dem Prozessor (2) ausführbar sind, wobei
- die zumindest eine Sicherheitsapplikation (9, 10) eingerichtet ist, eine Voraussetzung zur Ausführung der Anwendungsapplikation (15) zu prüfen; und
- die Steuereinrichtung (8) eingerichtet ist, die zumindest eine Sicherheitsapplikation (9, 10) als zumindest zwei Sicherheitsprozesse (13,14) sowie die Anwendungsapplikation (11) als Anwendungsprozess (15) auf dem Prozessor (2) auszuführen;
**dadurch gekennzeichnet, dass** die Steuereinrichtung (8) eingerichtet ist, und
von den zumindest zwei Sicherheitsprozessen (13,14) und dem Anwendungsprozess (15) zumindest zwei Prozesse mittels des Prozessors (2) zumindest teilweise nebenläufig auszuführen,
die Ausführung der Anwendungsapplikation (11) als Anwendungsprozess (15) zu veranlassen, wenn die Voraussetzung von zumindest einem Sicherheitsprozess (13, 14) festgestellt wird und wenn zumindest einer der zumindest zwei Sicherheitsprozesse (13,14) noch nicht beendet ist, und eine der zumindest einen Sicherheitsapplikation (9, 10) zumindest zweimal als identische Sicherheitsprozesse (13, 14) auf dem Prozessor (2) auszuführen.

14. Datenträger (1) nach Anspruch 13, **dadurch gekennzeichnet, dass** der Datenträger (1) eine Chipkarte, eine sichere Multimediakarte, oder ein USB-Speichermedium ist.

15. Datenträger (1) nach Anspruch 13 oder 14, **dadurch gekennzeichnet, dass** der Datenträger angepasst ist zur Ausführung eines Verfahrens nach einem der Ansprüche 1 bis 12.

## Claims

1. A method for executing an application process (15) on a portable data carrier (1) having a processor (2), whereby at least two security processes (13, 14) checking a precondition for an execution of the application process (15) are executed by the processor (2), **characterized in that** at least two processes of the at least two security processes (13, 14) and the application process (15) are executed by means of the processor (2) at least partly concurrently, and the execution of the application process (15) is begun when at least one of the at least two security processes (13, 14) has ascertained the precondition and when at least one of the at least two security processes (13, 14) is not yet completed and the at least two security processes (13, 14) check the same precondition.

2. The method according to claim 1, **characterized in that** the at least two security processes (13, 14) check as a precondition an authorization to execute the application process.

3. The method according to claim 2, **characterized in that** upon the execution of the at least two security processes (13, 14), authentication data (24) of a user of the data carrier (1) are compared with reference data (12) present in a memory (5) of the data carrier (1), whereby the authentication data (24) comprise biometric features and/or an alphanumeric identifier.

4. The method according to either of claims 1 to 3, **characterized in that** the at least two security processes (13, 14) are executed concurrently.

5. The method according to any of claims 1 to 4, **characterized in that**, after the precondition has been ascertained by at least one of the at least two security processes (13, 14), at least one further security process (14) and the application process (15) are executed concurrently.

6. The method according to claim 4 or 5, **characterized in that** upon the concurrent execution a security process (13) or the application process (15) has a higher execution priority than the concurrently executed at least one further security process (14).

7. The method according to any of claims 1 to 5, **characterized in that** results (16) of the application process (15) are processed further only when the at least two security processes (13, 14) have ascertained the precondition matchingly.

8. The method according to claim 7, **characterized in that** the results (16) of the application process (15) comprise the outputting of data and/or the issuing of an instruction.

9. The method according to claim 7, **characterized in that** as results (16) of the application process (15), a reaction of a remote station (20) connected to the data carrier (1) is prompted.

10. The method according to claim 9, **characterized in that** the results (16) of the application process (15) are processed further by the results (16) being transferred to the remote station (20), after the precondition has been matchingly ascertained.

11. The method according to claim 9, **characterized in that** the results (16) of the application process (15) are processed further by the results (16) being transferred to the remote station (20) and processed further by the remote station (20), whereby further processing results of the remote station (20) are implemented only after the precondition has been matchingly ascertained.

12. The method according to any of claims 1 to 11, **characterized in that** the execution of the application process (15) is aborted and/or results (16) of the application process (15) discarded when at least one of the at least two security processes (13, 14) finally has not ascertained a precondition.

13. A portable data carrier (1) having a processor (2), comprising a control device (8), at least one security application (9, 10) and a user application (11) which are executable by the processor (2), whereby
- the at least one security application (9, 10) is set up to check a precondition for execution of the user application (15); and
- the control device (8) is set up to execute the at least one security application (9, 10) as at least two security processes (13, 14), and the user application (11) as an application process (15), on the processor (2);
**characterized in that** the control device (8) is set up, and [*sic*]
to execute at least two processes of the at least two security processes (13, 14) and the application process (15) by means of the processor (2) at least partly concurrently,
to prompt the execution of the user application (11) as an application process (15) when the precondition is ascertained by at least one security process (13, 14) and when at least one of the at least two security processes (13, 14) is not yet completed, and to execute one of the at least one security application (9, 10) at least twice as identical security processes (13, 14) on the processor (2).

14. The data carrier (1) according to claim 13, **characterized in that** the data carrier (1) is a chip card, a secure multimedia card, or a USB storage medium.

15. The data carrier (1) according to claim 13 or 14, **characterized in that** the data carrier is adapted for execution of a method according to any of claims 1 to 12.

## Revendications

1. Procédé d'exécution d'un processus d'application (15) sur un support de donnés portable (1) comportant un processeur (2), où au moins deux processus de sécurité (13, 14) vérifiant une condition d'exécution du processus d'application (15) sont exécutés par le processeur (2), **caractérisé en ce qu'**au moins deux processus parmi les deux processus de sécurité (13, 14) ou plus et le processus d'application (15) sont exécutés au moins en partie conjointement au moyen du processeur (2), et **en ce que** l'exécution du processus d'application (15) est commencée si au moins un des deux processus de sécurité (13, 14) ou plus a constaté la condition, et si au moins un des deux processus de sécurité (13, 14) ou plus n'est pas encore terminé et que les deux processus de sécurité (13, 14) ou plus vérifient la même condition.

2. Procédé selon la revendication 1, **caractérisé en ce que** les deux processus de sécurité (13, 14) ou plus vérifient une autorisation d'exécution du processus d'application en tant que condition.

3. Procédé selon la revendication 2, **caractérisé en ce que**, lors de l'exécution des deux processus de sécurité (13, 14) ou plus, des données d'authentification (24) d'un utilisateur du support de donnés (1) sont comparées avec des données de référence (12) présentes dans une mémoire (5) du support de donnés (1), les données d'authentification (24) comprenant des caractéristiques biométriques et/ou une identification alphanumérique.

4. Procédé selon l'une des revendications 1 à 3, **caractérisé en ce que** les deux processus de sécurité (13, 14) ou plus sont exécutés conjointement.

5. Procédé selon l'une des revendications 1 à 4, **caractérisé en ce qu'**une fois constatée la condition d'au moins un des deux processus de sécurité (13, 14) ou plus, au moins un autre processus de sécurité (14) et le processus d'application (15) sont exécutés conjointement.

6. Procédé selon la revendication 4 ou la revendication 5, **caractérisé en ce que** lors de l'exécution conjointe, un processus de sécurité (13) ou le processus d'application (15) présentent une priorité d'exécution supérieure à celle de l'autre ou des autres processus de sécurité (14) exécutés conjointement.

7. Procédé selon l'une des revendications 1 à 5, **caractérisé en ce que** les résultats (16) du processus d'application (15) ne sont traités que si les deux processus de sécurité (13, 14) ou plus ont effectué un constat concordant de la condition.

8. Procédé selon la revendication 7, **caractérisé en ce que** les résultats (16) du processus d'application (15) comprennent l'édition de données et/ou la délivrance d'une instruction.

9. Procédé selon la revendication 7, **caractérisé en ce qu'**une réaction d'un terminal (20) relié au support de donnés (1) est provoquée en tant que résultat (16) du processus d'application (15).

10. Procédé selon la revendication 9, **caractérisé en ce que** les résultats (16) du processus d'application (15) sont traités par transmission desdits résultats (16) au terminal (20), après constat concordant de la condition.

11. Procédé selon la revendication 9, **caractérisé en ce que** les résultats (16) du processus d'application (15) sont traités par transmission desdits résultats (16) au terminal (20), et traités par le terminal (20), les résultats de traitement du terminal (20) n'étant appliqués qu'après constat concordant de la condition.

12. Procédé selon l'une des revendications 1 à 11, **caractérisé en ce que** l'exécution du processus d'application (15) est interrompue et/ou les résultats (16) du processus d'application (15) rejetés, si au moins un des deux processus de sécurité (13, 14) ou plus n'a finalement constaté aucune condition.

13. Support de donnés portable (1) comportant un processeur (2), comprenant un dispositif de commande (8), au moins une application de sécurité (9, 10) et une application d'utilisation (11) exécutables par le processeur (2), où
- la ou les applications de sécurité (9, 10) sont prévues pour vérifier une condition d'exécution de l'application d'utilisation (15) ; et où
- le dispositif de commande (8) est prévu pour exécuter la ou les applications de sécurité (9, 10) en tant que double processus de sécurité (13, 14) ou plus ainsi que l'application d'utilisation (11) en tant que processus d'application (15) sur le processeur (2);
**caractérisé**
**en ce que** le dispositif de commande (8) est prévu pour exécuter au moins deux processus parmi les deux processus de sécurité (13, 14) ou plus et le processus d'application (15), au moins en partie conjointement au moyen du processeur (2),
pour provoquer l'exécution de l'application d'utilisation (11) en tant que processus d'application (15), si la condition est constatée par au moins un processus de sécurité (13, 14) et si au moins un des deux processus de sécurité (13, 14) ou plus n'est pas encore terminé, et pour exécuter une parmi la ou les applications de sécurité (9, 10) deux fois en tant que processus de sécurité (13, 14) identique sur le processeur (2).

14. Support de donnés (1) selon la revendication 13, **caractérisé en ce que** ledit support de donnés (1) est une carte à puce, une carte multimédia sécurisée, ou un support de mémoire USB.

15. Support de donnés (1) selon la revendication 13 ou la revendication 14, **caractérisé en ce que** ledit support de données est approprié pour exécuter un processus selon l'une des revendications 1 à 12.
